(19) Europäisches Patentamt
European Patent Office
Office européen des brevets

(11) **EP 4 500 129 B1**

(12) **FASCICULE DE BREVET EUROPEEN**

(45) Date de publication et mention
de la délivrance du brevet:
**19.11.2025 Bulletin 2025/47**

(21) Numéro de dépôt: **23706653.5**

(22) Date de dépôt: **18.01.2023**

(51) Classification Internationale des Brevets (IPC):
*G01K 3/10* (2006.01)   *G01K 1/022* (2021.01)
*G01K 13/02* (2021.01)   *F01P 11/16* (2006.01)
*B60K 11/02* (2006.01)   *B60K 1/00* (2006.01)

(52) Classification Coopérative des Brevets (CPC):
**G01K 1/022; B60K 11/02; F01P 11/16; G01K 3/10;
G01K 13/026;** B60K 2001/005; B60Y 2306/15;
B60Y 2400/302; F01P 2050/24

(86) Numéro de dépôt international:
**PCT/FR2023/050063**

(87) Numéro de publication internationale:
**WO 2023/187268 (05.10.2023 Gazette 2023/40)**

(54) **SURVEILLANCE DU BON FONCTIONNEMENT D'UN CAPTEUR DE TEMPÉRATURE DU CIRCUIT CALOPORTEUR DE LA BATTERIE DE TRACTION**

ÜBERWACHUNG DES KORREKTEN BETRIEBS EINES WÄRMTRANSPORTKREISTEMPERATURSENSORS EINER TRAKTIONSBATTERIE

MONITORING OF CORRECT OPERATION OF A TRACTION BATTERY HEAT TRANSPORT CIRCUIT TEMPERATURE SENSOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.03.2022 FR 2202733**

(43) Date de publication de la demande:
**05.02.2025 Bulletin 2025/06**

(73) Titulaire: **Stellantis Auto SAS
78300 Poissy (FR)**

(72) Inventeurs:
• **BALENGHIEN, Olivier
93390 CLICHY SOUS BOIS (FR)**
• **PIRES, Ludovic
78300 POISSY (FR)**

(74) Mandataire: **PSIP
Stellantis Auto SAS
Service REIP - YT800
43, rue Jean Pierre Timbaud
78300 Poissy (FR)**

(56) Documents cités:
**FR-A1- 2 851 299    FR-A1- 3 095 004**

## Description

### DOMAINE TECHNIQUE DE L'INVENTION

L'invention concerne, de façon générale, le domaine technique du diagnostic ou de la surveillance du bon fonctionnement des capteurs thermiques installés dans des circuits caloporteurs.

L'invention se rapporte plus spécifiquement à un procédé de surveillance du capteur thermique du circuit caloporteur de la batterie de traction d'un véhicule électrique ou hybride.

L'invention concerne en outre un système de surveillance d'un capteur de température d'un circuit caloporteur.

L'invention s'applique en particulier à un véhicule électrique ou hybride comprenant un superviseur de groupe motopropulseur apte à mettre en œuvre un procédé de surveillance du capteur thermique du circuit caloporteur de la batterie de traction.

### ÉTAT DE LA TECHNIQUE ANTÉRIEURE

Dans la suite, lorsque la description se réfère à un véhicule électrique ou hybride choisi comme exemple de mise en œuvre non limitatif de l'invention. Néanmoins, l'invention peut s'appliquer également à tout système comprenant un circuit caloporteur incluant au moins un capteur thermique, tel que les véhicules thermiques, ou les bateaux, les tracteurs.

Les véhicules électriques comportent habituellement un circuit de gestion thermique d'un moyen de stockage d'énergie électrique, telle une batterie électrique 400V, aussi appelé batterie de traction du fait que l'énergie électrique qui y est stockée sert à alimenter un groupe motopropulseur pour mouvoir le véhicule. Ce type de circuit comporte une pompe de circulation pour faire circuler un fluide caloporteur dans le circuit caloporteur ainsi qu'un dispositif pour chauffer le fluide caloporteur et un dispositif de refroidissement du fluide caloporteur circulant dans le circuit caloporteur. Le fluide caloporteur ainsi chauffé ou refroidi est utilisé pour réguler la température de la batterie électrique 400V.

Les véhicules électriques comportent en outre un circuit de gestion thermique d'un aérotherme pour réguler la température de l'habitacle. Ce type de circuit comporte usuellement une pompe pour la circulation d'un fluide caloporteur dans le circuit ainsi qu'un dispositif pour chauffer le fluide caloporteur et un dispositif pour refroidir le fluide caloporteur circulant dans le circuit. Le fluide caloporteur ainsi chauffé ou refroidi est utilisé pour réguler la température de l'aérotherme et par voie de conséquence l'habitacle.

Les véhicules électriques comportent également un circuit de gestion thermique d'une machine électrique tournante, telle une machine de traction. Ce type de circuit comporte une pompe pour la circulation d'un fluide caloporteur dans le circuit ainsi qu'un radiateur pour refroidir le fluide caloporteur circulant dans le circuit. Le fluide caloporteur ainsi refroidi est utilisé pour réguler la température de la machine électrique tournante.

Actuellement, chacun de ces circuits caloporteurs inclut au moins un capteur thermique. C'est-à-dire au moins un capteur thermique sur la boucle du circuit caloporteur d'une batterie de traction, un capteur thermique sur la boucle du circuit caloporteur d'une machine électrique, et un capteur thermique sur la boucle du circuit caloporteur du circuit aérotherme du véhicule. La surveillance de ces capteurs thermiques se fait en mesurant les écarts sur les valeurs de température mesurées par ces 3 capteurs thermiques sur le même principe que sur des véhicules thermiques conventionnels.

Avec l'optimisation du fonctionnement des circuits caloporteurs sur les véhicules électriques en vue de réduire leur consommation énergétique, les trois circuits caloporteurs mentionnés ci-dessus ont beaucoup d'états où les trois circuits caloporteurs fonctionnent en totale indépendance, et pour lesquels les températures mesurées par les 3 capteurs thermiques sont totalement indépendantes et souvent totalement divergentes. Par exemple, lorsque la batterie de traction est refroidie, pendant que l'habitacle du véhicule est réchauffé.

Pour permettre de diagnostiquer le fonctionnement des capteurs thermiques malgré les divergences possibles entre les températures à mesurer, il est possible d'augmenter les valeurs seuil des écarts de température pour ne pas diagnostiquer de faux dysfonctionnements des capteurs thermiques. Cependant, cette augmentation des valeurs seuils des écarts de température augmente également la permissivité à des dysfonctionnements des capteurs thermiques ce qui altère la fiabilité du diagnostic des capteurs thermiques.

En outre, l'état de la technique est connu des documents FR3095004A1 et FR2851299A1.

Il existe donc un besoin pour une stratégie de diagnostic fiable du fonctionnement du capteur de température du circuit caloporteur de la batterie de traction. En effet, il est impératif de pouvoir garantir le bon fonctionnement du capteur de température du circuit caloporteur de la batterie de traction en se fiant sur la pertinence des valeurs de températures qu'envoie le capteur de température. Le bon fonctionnement du circuit caloporteur de la batterie de traction assure la protection des utilisateurs et l'intégrité du véhicule vis-à-vis du risque d'incendie.

### EXPOSÉ DE L'INVENTION

L'invention a pour but de remédier à tout ou partie des inconvénients de l'état de la technique en proposant une stratégie innovante de diagnostic de la pertinence des informations envoyées par le capteur de température du circuit caloporteur de la batterie de traction du véhicule. Cette stratégie de surveillance selon l'invention est basée sur une surveillance des gradients de température renvoyés par le capteur de température du circuit caloporteur de la batterie de traction durant un laps de temps défini, pour vérifier la plausibilité des valeurs de températures envoyées par le capteur de température pour s'assurer de son bon fonctionnement.

À cet effet, il est proposé, selon un premier aspect de l'invention, un procédé de surveillance d'un capteur de température apte à être utilisé dans un circuit caloporteur dans lequel :

- une température mesurée par ledit capteur de température est relevée à une fréquence de mesure déterminée, et
- des gradients de température obtenus à partir des températures mesurées par le capteur de température en un laps de temps défini sont surveillés par un contrôleur pour vérifier la plausibilité de la valeur de la température mesurée par le capteur de température,
- pour obtenir les gradients de température, une température mémorisée est obtenue par la mémorisation d'une des températures mesurées par ledit capteur de température à une fréquence de mémorisation déterminée inférieure à la fréquence de mesure, durant une période de mémorisation, ladite température mesurée est comparée à ladite température mémorisée, et
- si l'écart de température entre la température mesurée et la température mémorisée dépasse un seuil de température prédéfini, alors un compteur est incrémenté , et lorsque le compteur atteint une valeur seuil déterminée un mode de reconfiguration est enclenché, ce mode de reconfiguration comprenant :

  - la mémorisation d'un code défaut spécifique au dysfonctionnement dudit capteur de température, et/ou l'initiation d'une stratégie de refroidissement par le circuit caloporteur pendant une durée de refroidissement déterminée.

Grâce à une telle combinaison de caractéristiques, le procédé de surveillance d'un capteur de température d'un circuit caloporteur permet de garantir, indépendamment du fonctionnement des autres capteurs de température, le bon fonctionnement du capteur de température du circuit caloporteur de la batterie de traction ce qui assure le bon fonctionnement du circuit caloporteur de la batterie de traction et ainsi permet d'apporter une protection plus fiable aux utilisateurs et pour l'intégrité du véhicule vis-à-vis du risque d'incendie.

Préférentiellement, les températures mesurées sont envoyées au contrôleur qui effectue la comparaison entre la température mesurée et la température mémorisée par ledit contrôleur.

Avantageusement, lors des phases de calibrage dudit procédé de surveillance dudit capteur de température dans son contexte d'utilisation, la fréquence de mémorisation est déterminée, le seuil de température est défini pour une fréquence de mémorisation déterminée, et la valeur seuil du compteur est définie.

Avantageusement lors d'une phase d'initialisation, le compteur est à zéro, et/ou la température mémorisée est initialisée à une valeur d'initialisation déterminée jusqu'à la fin d'une première période de mémorisation où une température mesurée est mémorisée, et/ou lors d'une phase de fin de fonctionnement, le compteur est remis à zéro et la dernière température mémorisée n'est pas sauvegardée.

Selon un deuxième aspect de l'invention, il est proposé un procédé de surveillance d'un capteur de température dans un circuit caloporteur tel que décrit ci-dessus dans lequel ledit circuit caloporteur régule la température d'une batterie de traction alimentant un groupe motopropulseur d'un véhicule électrique ou hybride, et ledit contrôleur est un superviseur de groupe motopropulseur.

Selon un troisième aspect de l'invention, il est proposé un système de surveillance d'un capteur de température d'un circuit caloporteur, comprenant un contrôleur recevant à une fréquence de mesure des valeurs de température mesurées par le capteur thermique, dans lequel le capteur thermique est installé dans un circuit caloporteur d'une batterie de traction, lesdites valeurs de température mesurées sont mémorisées par ledit contrôleur à une fréquence de mémorisation, ledit contrôleur compare durant une période de mémorisation la température mesurée à la température mémorisée, ledit contrôleur incrémente un compteur si l'écart de température entre la température mesurée et la température mémorisée est supérieur à un seuil de température prédéfini, et ledit contrôleur enclenche un mode de reconfiguration si le compteur atteint une valeur seuil déterminée, ce mode de reconfiguration comprend la mémorisation d'un code défaut spécifique au dysfonctionnement dudit capteur de température et l'initiation d'une stratégie de refroidissement de la batterie de traction par le circuit caloporteur pendant une durée de refroidissement déterminée.

Selon un quatrième aspect de l'invention, il est proposé un véhicule électrique ou hybride comprenant un superviseur de groupe motopropulseur, une batterie de traction, et au moins un circuit caloporteur apte à réguler la température de ladite batterie de traction, ledit au moins un circuit caloporteur comprenant au moins un capteur thermique, dans lequel ledit superviseur de groupe motopropulseur comprend un système de surveillance tel que décrit ci-dessus pour mettre en œuvre un procédé de surveillance d'un capteur de température tel que décrit ci-dessus.

D'autres caractéristiques et avantages de l'invention sont mis en évidence par la description ci-après d'exemples non limitatifs de réalisation des différents aspects de l'invention.

## BRÈVE DESCRIPTION DES FIGURES

La description se réfère aux figures annexées qui sont aussi données à titre d'exemples de réalisation non limitatifs de l'invention :

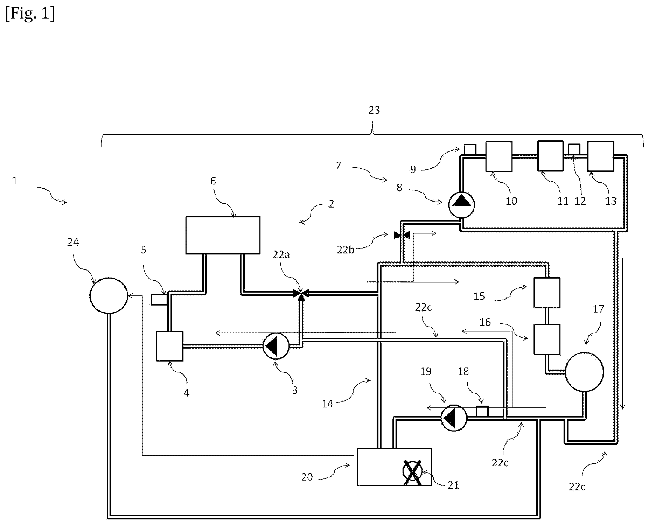

[Fig. 1] la figure 1 illustre de façon schématique un système de gestion thermique de différents composants d'un véhicule selon un exemple de mise en œuvre de l'invention.

## DESCRIPTION DÉTAILLÉE D'UN MODE DE RÉALISATION

La figure 1 [Fig 1] illustre un système de gestion thermique 1 d'un véhicule électrique comprenant trois circuits caloporteurs : un circuit caloporteur de l'habitacle 7 qui permet de réguler la température d'un l'habitacle du véhicule (non illustré) en le refroidissant ou en le réchauffant en fonction de la volonté des utilisateurs, un circuit caloporteur d'un groupe motopropulseur 14 qui permet de refroidir une machine électrique 17, un inverter 16 et un convertisseur de courant 15 ; et un circuit caloporteur de batterie de traction 2 qui permet de refroidir ou de réchauffer une batterie de traction 6, par exemple une batterie de 400V.

Le circuit caloporteur de batterie de traction 2 comporte en série :

- une première pompe 3 pour la circulation du fluide caloporteur dans le circuit caloporteur de batterie de traction 2,

- un premier dispositif de refroidissement 4 du fluide caloporteur circulant dans le premier circuit 2, ce premier dispositif de refroidissement 4 pouvant être formé par un échangeur de chaleur entre le fluide caloporteur et un fluide réfrigérant issu d'un compresseur de climatisation (non illustré) permettant d'abaisser la température du fluide caloporteur (le premier dispositif de refroidissement 4 est également connu par son appellation en anglais chiller),

- un premier capteur de température 5 pour mesurer la température du fluide caloporteur circulant dans le circuit caloporteur de batteries de traction 2, et

- la batterie de traction 6.

Le circuit caloporteur de l'habitacle 7 permet de réguler la température de l'habitacle grâce à un aérotherme 13, il comporte en série :

- une deuxième pompe 8 pour la circulation du fluide caloporteur dans le circuit caloporteur de l'habitacle 7,

- un deuxième capteur de température 9 pour mesurer la température du fluide caloporteur sortant de la deuxième pompe 8,

- un deuxième dispositif de refroidissement 10 du fluide caloporteur circulant dans le circuit caloporteur de l'habitacle 7, ce deuxième dispositif de refroidissement 10 pouvant être formé par un échangeur de chaleur entre un fluide caloporteur et un fluide réfrigérant issu d'un compresseur de climatisation (non illustré) permettant d'abaisser la température du fluide caloporteur (le deuxième dispositif de refroidissement 10 est aussi appelé condenseur),

- un dispositif de chauffage 11 du fluide caloporteur, ce dispositif de chauffage 11 peut être formé par une résistance chauffante,

- un troisième capteur de température 12 pour mesurer la température du fluide caloporteur sortant du dispositif de chauffage 11, et

- l'aérotherme 13 formé par un échangeur de chaleur entre le fluide caloporteur et l'air de l'habitacle du véhicule pour augmenter ou diminuer la température de l'habitacle.

Le circuit caloporteur du groupe motopropulseur 14 comporte en série :

- le convertisseur (par exemple de type OBC DC-DC 15),

- l'inverter 16,

- la machine électrique tournante 17,

- un quatrième capteur de température 18 pour mesurer la température du fluide caloporteur circulant dans le circuit caloporteur du groupe motopropulseur 14,

- une troisième pompe 19 pour la circulation du fluide caloporteur dans le circuit caloporteur du groupe motopropulseur 14, et

- un radiateur 20 muni d'un groupe motoventilateur 21 pour refroidir le fluide caloporteur circulant dans le circuit caloporteur du groupe motopropulseur 14.

Le système 1 comporte également un réservoir d'expansion 24 contenant le liquide caloporteur et des moyens de connexion fluidique 22a, 22b, 22c agencés pour connecter entre eux les trois circuits caloporteur 2, 7 et 14. À cette fin, les moyens de connexion fluidique sont formés par une première électrovanne trois voies 22a qui permet, selon qu'elle soit ouverte ou fermée, d'autoriser ou d'interdire la circulation du fluide caloporteur entre le circuit caloporteur de la batterie de traction 2 et le circuit caloporteur du groupe motopropulseur 14. Les moyens de connexion fluidique comportent en outre une deuxième électrovanne deux voies 22b qui permet d'autoriser ou d'interdire, selon qu'elle soit ouverte ou fermée, la circulation du fluide caloporteur entre le circuit caloporteur du groupe motopropulseur 14 et le circuit caloporteur de l'habitacle 7. Les moyens de connexion fluidique 22 comportent en outre un circuit de connexion 22c reliant une partie du circuit caloporteur de l'habitacle 7 située en aval de l'aérotherme 13 avec une partie du circuit caloporteur de la batterie de traction 2 située en amont de la première pompe 3.

Le système 1 comporte en outre un superviseur de groupe motopropulseur (non illustré) qui commande des moyens de pilotage 23 aptes à commander l'ouverture ou la fermeture de la première électrovanne trois voies 22a et de la deuxième électrovanne deux voies 22b ; à activer la première pompe 3, la deuxième pompe 8 et la troisième pompe 19 ; à activer le dispositif de chauffage 11 pour chauffer le fluide caloporteur circulant dans les circuits caloporteurs de la batterie de traction et de l'habitacle 2,7 lorsqu'ils sont connectés ; et à désactiver le groupe motoventilateur 21 du radiateur 20.

Le superviseur du groupe motopropulseur contrôle un des modes de fonctionnement du système 1 enclenchés par les moyens de pilotages 23. À cette fin, le superviseur de groupe motopropulseur reçoit différentes informations, notamment les valeurs de température mesurées par les différents capteurs de température mentionnés ci-dessus.

Le circuit caloporteur de la batterie de traction 2 doit permettre de réguler la température de la batterie de traction 6 pour optimiser son fonctionnement, éviter les risques d'incendie en cas de surchauffe de la batterie de traction 6. En effet, quand la batterie de traction 6 est trop froide, les performances de la batterie de traction 6 sont réduites aussi bien lors des charges (les temps de charges sont augmentés), que lors des phases de roulages (la batterie de traction fournit une énergie limitée à la machine électrique tournante 17 du groupe motopropulseur).

Il est donc nécessaire de réguler la température de la batterie de traction 6 en refroidissant le fluide caloporteur dans le circuit caloporteur de la batterie de traction 2 avec le premier dispositif de refroidissement 4, ou en réchauffant le fluide caloporteur par un système de réchauffement de la batterie de traction. Dans le système 1 illustré par la figure 1 et décrit ci-dessus, c'est le dispositif de chauffage 11 du fluide caloporteur dans le deuxième circuit caloporteur 7 servant à réchauffer l'habitacle qui est utilisé pour réchauffer la batterie de traction. Comme indiqué ci-dessus, c'est le superviseur du groupe motopropulseur qui agit sur les moyens de pilotage 23 pour réguler la température du fluide caloporteur dans le circuit caloporteur de la batterie de traction 2.

Pour s'assurer d'un bon fonctionnement du premier circuit caloporteur 2 et donc d'une bonne régulation de la température de la batterie de traction 6, une surveillance du bon fonctionnement du premier capteur de température 5 est réalisée par le superviseur de groupe motopropulseur selon le procédé décrit ci-dessous. C'est la stratégie de surveillance du premier capteur de température 5 qui est décrit dans la suite qui se concentrera sur le circuit caloporteur de la batterie de traction 2 et sur le premier capteur de température 5. Par commodité, ils seront appelés respectivement dans la suite le circuit caloporteur 2 et le capteur de température 5.

La stratégie de surveillance du capteur de température 5 du circuit caloporteur 2 selon l'invention consiste à mémoriser la température mesurée par le capteur de température 5 à une fréquence définie, et ensuite la température mémorisée est comparée avec la température mesurée par le capteur de température 5 entre deux périodes de mémorisation. Si l'écart de température entre la température mesurée et la température mémorisée dépasse un écart de température seuil, alors on incrémente un compteur. Au bout d'un certain nombre d'itérations, une stratégie de reconfiguration est enclenchée. La stratégie de surveillance du capteur de température 5 du circuit caloporteur 2 est décrite en détail ci-dessous.

La valeur de température transmise par le capteur de température 5 du circuit caloporteur de la batterie de traction 2 au superviseur de groupe motopropulseur est mémorisée à une fréquence DT, cette température mémorisée est nommée TM. Puis, le capteur de température 5 continue de mesurer et d'envoyer au superviseur de groupe motopropulseur la température du fluide caloporteur dans le circuit caloporteur de la batterie de traction 2 environ toutes les 50 millisecondes (soit à une fréquence de mesure d'environ 20 Hz), les températures mesurées sont appelées Tb.

Le superviseur du groupe motopropulseur compare l'écart de température en valeur absolue entre TM et Tb, qui est nommé ET, avec

$$[\text{Math 1}] \quad ET = \text{abs}(TM - Tb).$$

Ensuite, le superviseur du groupe motopropulseur compare ET avec un seuil de température limite nommé ST. Si ET dépasse ST, alors le superviseur de groupe motopropulseur incrémente d'une unité un compteur, nommé COMP. Quand le compteur COMP atteint un seuil, nommé SC, le superviseur déclenche un mode de reconfiguration qui est détaillé ci-après.

La fréquence DT est calibrable lors de la phase de mise au point de cette fonction de surveillance du bon fonctionnement du capteur de température 5 du circuit caloporteur 2. Par exemple, la fréquence DT peut être calibrée à 10 secondes. Ainsi, toutes les 10 secondes, le superviseur du groupe motopropulseur mémorise l'information de température reçue du capteur de température 5 du circuit caloporteur de la batterie de traction 2.

Le seuil de température ST est calibrable lors de la phase de mise au point de cette fonction de surveillance du bon fonctionnement du capteur de température 5 du circuit caloporteur 2. Par exemple, le seuil de température ST peut être calibré à 16°C. Cette valeur de seuil est fixée en fonction de la fréquence DT qui a été calibrée. Ces valeurs sont déterminées expérimentalement pour un type de circuit caloporteur. Ainsi, la température mesurée par le capteur de température 5 ne peut pas changer de plus de 16°C en moins de 10 secondes. Donc si le capteur de température 5 du circuit caloporteur 2 de batterie de traction 6 indique un changement de température de plus de 16°C en moins de 10s, c'est que le capteur de température 5 du circuit caloporteur 2 de la batterie de traction 6 dysfonctionne.

Le seuil du compteur SC est également calibrable lors de la phase de mise au point de cette fonction de surveillance du bon fonctionnement du capteur de température 5 du circuit caloporteur 2. La valeur seuil du compteur SC peut être calibrée à 3. Ainsi, si le compteur COMP arrive à 3, le superviseur du groupe motopropulseur déclenche le mode de reconfiguration. Le mode de reconfiguration est décrit ci-après.

Comme décrit ci-dessus, quand le compteur COMP atteint le seuil SC, le superviseur de groupe motopropulseur déclenche un mode de reconfiguration qui se déroule comme expliqué ci-dessous.

Dans un premier temps, le superviseur de groupe motopropulseur mémorise un code défaut, pour que le service après-vente puisse être informé de ce défaut et qu'il puisse lors de la révision changer le capteur de température 5 du circuit caloporteur 2 de la batterie de traction 5. En parallèle, le superviseur déclenche une stratégie de refroidissement de la batterie de traction 6 en mettant en marche la première pompe à eau 3 pour activer la circulation du fluide caloporteur dans le circuit caloporteur 2 de la batterie de traction 6.

En même temps le chiller 4 et le compresseur de climatisation sont activés. Ainsi, du fluide réfrigérant est envoyé au chiller 4 pour refroidir le fluide caloporteur.

Ce mode de reconfiguration est lancé pendant un temps TR qui est aussi calibrable lors de la phase de mise au point, par exemple TR peut être calibré à 3 minutes.

Quand la reconfiguration est lancée par le superviseur du groupe motopropulseur, le compteur COMP se réinitialise à zéro au terme du temps TR. Ainsi, après la fin de la phase de reconfiguration, il faut que le compteur Comp revienne à 3 pour que le superviseur du groupe motopropulseur relance une phase de reconfiguration.

Lors de la mise du contacte sur ON par le conducteur, une phase d'initialisation est enclenchée. Durant cette phase de réinitialisation, le compteur COMP est à 0 et la température mémorisée TM dans la mémoire du superviseur du groupe motopropulseur est initialisée à une valeur calibrable lors de la phase de mise au point, par exemple cette température d'initialisation peut être à 25°C. Ce n'est qu'au bout de la première période de mémorisation correspondante à DT que la température réellement mesurée par le capteur de température 5 du circuit caloporteur 2 de la batterie de traction 6 est mémorisée dans la variable TM par le superviseur.

À la fin de la période de roulage, quand le conducteur met le contacte du véhicule VHL sur OFF, le compteur COMP est remis à zéro et la température mémorisée TM n'est pas mémorisée dans une mémoire morte du superviseur du groupe motopropulseur. De ce fait, la dernière mémorisation de la température du circuit caloporteur 2 de la batterie de traction 6 est perdue. Il n'y a aucun intérêt à la conserver, car lors de la prochaine mise du contact sur ON, c'est la température d'initialisation qui sera mémorisée dans la variable TM.

Naturellement, l'invention est décrite dans ce qui précède à titre d'exemple. Il est entendu que l'homme du métier est à même de réaliser différentes variantes de réalisation de l'invention sans pour autant sortir du cadre de l'invention tel que défini par les revendications.

Par exemple, la stratégie de surveillance du capteur de température 5 du circuit caloporteur 2 de la batterie de traction 2 décrite ci-dessus peut être mise en œuvre dans d'autres circuits caloporteurs d'un véhicule électrique ou hybride et également pour des capteurs de température équipant des circuits caloporteurs dans des véhicules thermiques ou d'autres moyens de transport de passagers ou de marchandises qu'ils soient terrestres, aériens, fluviaux ou maritimes.

## Revendications

1. Procédé de surveillance d'un capteur de température (5) apte à être utilisé dans un circuit caloporteur (2) **caractérisé en ce que** :

   - une température mesurée par ledit capteur de température (5) est relevée à une fréquence de mesure déterminée ; et
   - des gradients de température obtenus à partir des températures mesurées par le capteur de température (5) en un laps de temps défini sont surveillés par un contrôleur pour vérifier la plausibilité de la valeur de la température mesurée par le capteur de température (5),
   - pour déterminer les gradients de température une température mémorisée est obtenue par la mémorisation d'une des températures mesurées par ledit capteur de température (5) à une fréquence de mémorisation déterminée inférieure à la fréquence de mesure, et durant une période de mémorisation, ladite température mesurée est comparée à ladite température mémorisée ; et
   si l'écart de température entre la température mesurée et la température mémorisée dépasse un seuil de température prédéfini, alors un compteur est incrémenté, et lorsque le compteur atteint une valeur seuil déterminée, un mode de reconfiguration est enclenché, ce mode de reconfiguration comprenant :
la mémorisation d'un code défaut spécifique au dysfonctionnement dudit capteur de température (5); et/ou l'initiation d'une stratégie de refroidissement par le circuit caloporteur (2) pendant une durée de refroidissement déterminée.

2. Procédé de surveillance d'un capteur de température apte à être utilisé dans un circuit caloporteur selon la revendication 1, **caractérisé en ce que** les températures mesurées sont envoyées au contrôleur qui effectue la comparaison entre la température mesurée et la température mémorisée par ledit contrôleur.

3. Procédé de surveillance d'un capteur de température apte à être utilisé dans un circuit caloporteur selon l'une des revendications 1 à 2, **caractérisé en ce que** lors des phases de calibrage dudit procédé de surveillance dudit capteur de température (5) dans son contexte d'utilisation :

   - la fréquence de mémorisation est déterminée ;
   - le seuil de température est défini pour une fréquence de mémorisation déterminée ; et
   - la valeur seuil du compteur est définie.

4. Procédé de surveillance d'un capteur de température apte à être utilisé dans un circuit caloporteur selon l'une des revendications 1 à 3, **caractérisé en ce que** :

   - lors d'une phase d'initialisation, le compteur est à zéro, et/ou la température mémorisée est initialisée à une valeur d'initialisation déterminée jusqu'à la fin d'une première période de mémorisation où une température mesurée est mémorisée ; et/ou
   - lors d'une phase de fin de fonctionnement, le compteur est remis à zéro et la dernière température mémorisée n'est pas sauvegardée.

5. Procédé de surveillance d'un capteur de température dans un circuit caloporteur (2) selon le procédé de surveillance d'un capteur de température (5) tel que défini dans une des revendications précédentes, **caractérisé en ce que** :

   - ledit circuit caloporteur (2) régule la température d'une batterie de traction (6) alimentant un groupe motopropulseur d'un véhicule électrique ou hybride, et
   - ledit contrôleur est un superviseur de groupe motopropulseur.

6. Système de surveillance d'un capteur de température (5) d'un circuit caloporteur (2), comprenant un contrôleur recevant à une fréquence de mesure des valeurs de température mesurées par le capteur thermique (5), **caractérisé en ce que** :

   - le capteur thermique (5) est installé dans un circuit caloporteur (2) d'une batterie de traction (6);
   - lesdites valeurs de température mesurées sont mémorisées par ledit contrôleur à une fréquence de mémorisation ;
   - ledit contrôleur compare durant une période de mémorisation la température mesurée à la température mémorisée ;
   - ledit contrôleur incrémente un compteur si l'écart de température entre la température mesurée et la température mémorisée est supérieur à un seuil de température prédéfini ; et
   - ledit contrôleur enclenche un mode de reconfiguration si le compteur atteint une valeur seuil déterminée
   - le mode de reconfiguration comprend la mémorisation d'un code défaut spécifique au dysfonctionnement dudit capteur de température (5), et l'initiation d'une stratégie de refroidissement de la batterie de traction (6) par le circuit caloporteur (2) pendant une durée de refroidissement déterminée.

7. Véhicule électrique ou hybride comprenant un superviseur de groupe motopropulseur, une batterie de traction (6), et au moins un circuit caloporteur (2) apte à réguler la température de ladite batterie de traction (6), ledit au moins un circuit caloporteur (2) comprenant au moins un capteur thermique (5), **caractérisé en ce que** ledit superviseur de groupe motopropulseur comprend un système de surveillance tel que défini dans la revendication 6 pour mettre en œuvre un procédé de surveillance d'un capteur de température (5) selon l'une des revendications 1 à 5.

**Patentansprüche**

1. Ein Verfahren zur Überwachung eines Temperatursensors (5), der für den Einsatz in einem Wärmeübertragungskreislauf (2) geeignet ist, zeichnet sich dadurch aus, dass:

   - eine vom Temperatursensor (5) gemessene Temperatur mit einer festgelegten Messfrequenz aufgezeichnet wird; und
   - Temperaturgradienten, die sich aus den vom Temperatursensor (5) über einen definierten Zeitraum gemessenen Temperaturen ergeben, von einer Steuerung überwacht werden, um die Plausibilität des vom Temperatursensor (5) gemessenen Temperaturwerts zu überprüfen;
   - zur Bestimmung der Temperaturgradienten eine gespeicherte Temperatur ermittelt wird, indem eine der vom Temperatursensor (5) gemessenen Temperaturen mit einer festgelegten Speicherfrequenz, die niedriger als die Messfrequenz ist, gespeichert wird; während eines Speicherzeitraums wird diese gemessene Temperatur mit der gespeicherten Temperatur verglichen; und überschreitet die Temperaturdifferenz zwischen der gemessenen und der gespeicherten Temperatur einen vordefinierten Temperaturschwellenwert, wird ein Zähler hochgezählt. Wenn der Zähler einen festgelegten Schwellenwert erreicht, wird ein Rekonfigurationsmodus ausgelöst. Dieser Rekonfigurationsmodus umfasst: die Speicherung eines Fehlercodes, der für die Fehlfunktion des Temperatursensors (5) spezifisch ist; und/oder die Einleitung einer Kühlstrategie durch den Wärmeübertragungskreislauf (2) für eine festgelegte Kühldauer.

2. Verfahren zur Überwachung eines Temperatursensors, geeignet für den Einsatz in einem Wärmeübertragungskreislauf nach Anspruch 1, **dadurch gekennzeichnet, dass** die gemessenen Temperaturen an den Regler gesendet werden, der die gemessene Temperatur mit der vom Regler gespeicherten Temperatur vergleicht.

3. Verfahren zur Überwachung eines Temperatursensors, geeignet für den Einsatz in einem Wärmeübertragungskreislauf nach einem der Ansprüche 1 bis 2, **dadurch gekennzeichnet, dass** während der Kalibrierungsphasen des Verfahrens zur Überwachung des Temperatursensors (5) in seinem Anwendungskontext:

   - die Speicherfrequenz bestimmt wird;
   - der Temperaturschwellenwert für eine bestimmte Speicherfrequenz definiert wird; und
   - der Schwellenwert des Zählers definiert wird.

4. Verfahren zur Überwachung eines Temperatursensors, geeignet für den Einsatz in einem Wärmeübertragungskreislauf nach einem der Ansprüche 1 bis 3, **dadurch gekennzeichnet, dass**:

   - während einer Initialisierungsphase der Zähler auf Null steht und/oder die gespeicherte Temperatur bis zum Ende einer ersten Speicherperiode, in der eine gemessene Temperatur gespeichert wird, auf einen bestimmten Initialisierungswert initialisiert wird; und/oder
   - während einer Betriebsendephase wird der Zähler auf Null zurückgesetzt, und die zuletzt gespeicherte Temperatur wird nicht gespeichert.

5. Verfahren zur Überwachung eines Temperatursensors in einem Wärmeübertragungskreislauf (2) gemäß dem Verfahren zur Überwachung eines Temperatursensors (5) gemäß einem der vorhergehenden Ansprüche, **dadurch gekennzeichnet, dass**:

   - der Wärmeübertragungskreislauf (2) die Temperatur einer Traktionsbatterie (6) regelt, die einen Antriebsstrang eines Elektrooder Hybridfahrzeugs versorgt, und
   - der Controller ein Antriebsstrang-Überwachungssystem ist.

6. System zur Überwachung eines Temperatursensors (5) eines Wärmeübertragungskreislaufs (2), umfassend einen Controller, der mit einer Messfrequenz die vom Wärmesensor (5) gemessenen Temperaturwerte empfängt, **dadurch gekennzeichnet, dass**:

   - der Wärmesensor (5) in einem Wärmeübertragungskreislauf (2) einer Traktionsbatterie (6) installiert ist;
   - die gemessenen Temperaturwerte vom Controller mit einer Speicherfrequenz gespeichert werden;
   - der Controller die gemessene Temperatur während einer Speicherperiode mit der gespeicherten Temperatur vergleicht;
   - Der Controller erhöht einen Zähler, wenn die Temperaturdifferenz zwischen der gemessenen und der gespeicherten Temperatur größer als ein vordefinierter Temperaturschwellenwert ist; und
   - Der Controller leitet einen Rekonfigurationsmodus ein, wenn der Zähler einen bestimmten Schwellenwert erreicht.
   - Der Rekonfigurationsmodus umfasst die Speicherung eines Fehlercodes, der für die Fehlfunktion des Temperatursensors (5) spezifisch ist, und die Einleitung einer Strategie zur Kühlung der Traktionsbatterie (6) durch den Wärmeübertragungskreislauf (2) für eine festgelegte Kühldauer.

7. Elektro- oder Hybridfahrzeug mit einer Antriebsstrangüberwachung, einer Traktionsbatterie (6) und mindestens einem Wärmeübertragungskreislauf (2), der die Temperatur der Traktionsbatterie (6) regeln kann, wobei der mindestens eine Wärmeübertragungskreislauf (2) mindestens einen Wärmesensor (5) umfasst, **dadurch gekennzeichnet, dass** die Antriebsstrangüberwachung ein Überwachungssystem gemäß Anspruch 6 zur Implementierung eines Verfahrens zur Überwachung eines Temperatursensors (5) gemäß einem der Ansprüche 1 bis 5 umfasst.

**Claims**

1. A method for monitoring a temperature sensor (5) suitable for use in a heat transfer circuit (2), **characterized in that**:

   - a temperature measured by said temperature sensor (5) is recorded at a determined measurement frequency; and
   - temperature gradients obtained from the temperatures measured by the temperature sensor (5) over a defined period of time are monitored by a controller to verify the plausibility of the temperature value measured by the temperature sensor (5),
   - to determine the temperature gradients, a stored temperature is obtained by storing one of the temperatures measured by said temperature sensor (5) at a determined storage frequency lower than the measurement frequency, and during a storage period, said measured temperature is compared

   with said stored temperature; and
   if the temperature difference between the measured temperature and the stored temperature exceeds a predefined temperature threshold, then a counter is incremented, and when the counter reaches a determined threshold value, a reconfiguration mode is triggered, this reconfiguration mode comprising:
   the storage of a fault code specific to the malfunction of said temperature sensor (5); and/or the initiation of a cooling strategy by the heat transfer circuit (2) for a determined cooling duration.

2. A method for monitoring a temperature sensor suitable for use in a heat transfer circuit according to claim 1, **characterized in that** the measured temperatures are sent to the controller, which compares the measured temperature with the temperature stored by said controller.

3. A method for monitoring a temperature sensor suitable for use in a heat transfer circuit according to one of claims 1 to 2, **characterized in that** during the calibration phases of said method for monitoring said temperature sensor (5) in its context of use:

   - the storage frequency is determined;
   - the temperature threshold is defined for a determined storage frequency; and
   - the threshold value of the counter is defined.

4. A method for monitoring a temperature sensor suitable for use in a heat transfer circuit according to one of claims 1 to 3, **characterized in that**:

   - during an initialization phase, the counter is at zero, and/or the stored temperature is initialized to a determined initialization value until the end of a first storage period in which a measured temperature is stored; and/or
   - during an end-of-operation phase, the counter is reset to zero and the last stored temperature is not saved.

5. A method for monitoring a temperature sensor in a heat transfer circuit (2) according to the method for monitoring a temperature sensor (5) as defined in one of the preceding claims, **characterized in that** :

   - said heat transfer circuit (2) regulates the temperature of a traction battery (6) supplying a powertrain of an electric or hybrid vehicle, and
   - said controller is a powertrain supervisor.

6. System for monitoring a temperature sensor (5) of a heat transfer circuit (2), comprising a controller receiving, at a measurement frequency, temperature values measured by the thermal sensor (5), **characterized in that** :

   - the thermal sensor (5) is installed in a heat transfer circuit (2) of a traction battery (6);
   - said measured temperature values are stored by said controller at a storage frequency;
   - said controller compares the measured temperature with the stored temperature during a storage period;
   - said controller increments a counter if the temperature difference between the measured temperature and the stored temperature is greater than a predefined temperature threshold; and
   - said controller initiates a reconfiguration mode if the counter reaches a determined threshold value.
   - the reconfiguration mode includes the storage of a fault code specific to the malfunction of said temperature sensor (5), and the initiation of a strategy for cooling the traction battery (6) by the heat transfer circuit (2) for a determined cooling duration.

7. Electric or hybrid vehicle comprising a powertrain supervisor, a traction battery (6), and at least one heat transfer circuit (2) capable of regulating the temperature of said traction battery (6), said at least one heat transfer circuit (2) comprising at least one thermal sensor (5), **characterized in that** said powertrain supervisor comprises a monitoring system as defined in claim 6 for implementing a method for monitoring a temperature sensor (5) according to one of claims 1 to 5.

[Fig. 1]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3095004 A1

- FR 2851299 A1